# EUROPEAN PATENT SPECIFICATION

(11) **EP 2 587 659 B1**
(45) Date of publication and mention of the grant of the patent: **08.12.2021**
(21) Application number: 11798129.0
(22) Date of filing: 21.06.2011
(51) Int. Cl.: H02M 7/797, H02M 7/12, H02M 7/48, H02P 27/06

(54) **INJECTION MOLDING MACHINE AND POWER SUPPLY REGENERATIVE CONVERTER**
SPRITZGUSSMASCHINE UND WANDLER ZUR STROMQUELLENWIEDERHERSTELLUNG
MACHINE DE MOULAGE PAR INJECTION ET CONVERTISSEUR RÉGÉNÉRATIF POUR SOURCE D'ALIMENTATION

(30) Priority: 23.06.2010 JP 2010142640
(43) Date of publication of application: 01.05.2013
(73) Proprietor: Sumitomo Heavy Industries, Ltd., Tokyo 141-6025 (JP)
(72) Inventor: MORITA, Hiroshi, Yokosuka-shi Kanagawa 237-8555 (JP); MIZUNO, Hiroyuki, Yokosuka-shi Kanagawa 237-8555 (JP); ABE, Yoshifuru, Yokosuka-shi Kanagawa 237-8555 (JP); KATOH, Atsushi, Yokosuka-shi Kanagawa 237-8555 (JP); OKADA, Noritaka, Yokosuka-shi Kanagawa 237-8555 (JP)
(74) Representative: Hoffmann Eitle
(86) International application number: PCT/JP2011/064144
(87) International publication number: WO 2011/162245

(56) References cited:
- JP-A- 4 244 798
- JP-A- 9 163 751
- JP-A- 9 163 751
- JP-A- 63 194 596
- JP-A- 63 194 596
- JP-A- H11 289 794
- JP-A- 2005 204 391
- US-A1- 2001 015 506
- None

## Description

### BACKGROUND OF THE INVENTION

### 1. Field of the Invention

The present invention relates to an injection molding machine including a power supply regenerative converter connected between an alternating current (AC) power supply and an inverter, and to the power supply regenerative converter.

### 2. Description of the Related Art

Conventionally, a power supply regenerative converter connected between an AC power supply and an inverter for driving a motor is known. The power supply regenerative converter monitors by a hysteresis comparator a difference between a direct current (DC) voltage of a DC link capacitor and a peak voltage value of the AC power supply. Also, the power supply regenerative converter starts a power supply regenerative operation if the DC voltage exceeds a first threshold value. Then, the power supply regenerative converter stops the power supply regenerative operation if the DC voltage falls below a second threshold value (which is less than the first threshold value).

To this, another power supply regenerative converter is known (see Patent Document 1 for example). The power supply regenerative converter switches its power-running operation and its power supply regenerative operation depending on two judgment results. One of the judgment results relates to a state of transfer of electric power (hereinafter referred to as an "electric power state") among an AC power supply, a motor, and the power supply regenerative converter based on "input current information" which is magnitude of an alternating current and a phase of an AC voltage concerning the AC power supply. The other of the judgment results relates to an electric power state based on "DC voltage information" which is a DC voltage of a DC link capacitor.

This electric power regenerative converter starts a power supply regenerative operation if it detects, based on the DC voltage information, a state where electric power generated by a motor flows into the DC link capacitor (hereinafter referred to as a "motor regenerative state"). Then, the electric power regenerative converter continues the power supply regenerative operation over a predetermined time period independently of a subsequent variation in the DC voltage.

Then, after a lapse of the predetermined time period, this electric power regenerative converter performs another judgment of the electric power state based on the DC voltage information, and a judgment of the electric power state based on the input current information which takes a relatively long time to stabilize its judgment result. The electric power regenerative converter continues the power supply regenerative operation further if it detects the motor regenerative state in at least one of the judgment results.

In this way, this power supply regenerative converter prevents a chattering (a phenomenon in which it switches the power-running operation and the power supply regenerative operation frequently) caused by the hysteresis comparator from arising when it starts the power supply regenerative operation.

### PRIOR ART DOCUMENTS

### PATENT DOCUMENTS

### Patent Document 1: JP1999-289794A

JP H11 289794 A relates to an inverter including a voltage detector for detecting the DC voltage on input side and outputting DC voltage information, a current detector for detecting current on commercial power supply side, a power voltage phase detector for detecting phase on a commercial power supply side, and a power running/regenerative determining part for determining which of the power running or regenerative running should be conducted, based on the detection results from the respective detectors.

US 2001 0015506 A1 relates to a motor drive of an induction motor comprising an inverter section, a charger, a charging and discharging circuit and a control section. The charger is for storing regenerated electric power of the induction motor via the inverter section. The charging and discharging circuit is for making the charger charge electric power and making the charger discharge the electric power. The control section carries out control of the charging and discharging circuit for making the charger charge the electric power when the induction motor generates regenerated electric power and making the charger supply the electric power to the induction motor in accelerating the induction motor or in electricity interruption.

JP 9163751 A relates to a device for suppressing the DC voltage between both the ends of a capacitor below a limit value even if the regenerative current keeps on flowing into the PWM control self-excited rectifier.

JP 363194596A relates to a differentiating circuit differentiating a charging voltage of a smoothing capacitor and outputting a differentiating signal multiplied by a gain corresponding to the static capacity of the smoothing capacitor.

### SUMMARY OF THE INVENTION

### PROBLEM TO BE SOLVED BY THE INVENTION

However, both the conventional power supply regenerative converter and the power supply regenerative converter in Patent Document 1 continue the power supply regenerative operation even after electric power regeneration from the motor into the DC link capacitor is completed, as long as the DC voltage of the DC link capacitor is greater than or equal to a predetermined threshold value. Hence, it is possible that they again draw electric power which has just been regenerated from the DC link capacitor into the AC power supply during electric power distribution to the motor immediately after the regeneration.

This transfer of electric power between the AC power supply and the power supply regenerative converter causes measurable power loss in an application where starting and stopping of the rotation of the motor is repeated frequently, such as a case where the power supply regenerative converter is used in an injection molding machine.

In view of the above, the present invention is intended to provide an injection molding machine including a power supply regenerative converter which is able to perform a power supply regenerative operation more efficiently and to provide the power supply regenerative converter.

### MEANS TO SOLVE THE PROBLEM

The object of the invention is achieved by the subject-matter of the independent claims. Advantageous embodiments are defined in the dependent claims. Further examples are provided for facilitating the understanding of the invention.

To achieve the above objective, an injection molding machine according to an embodiment of the present invention is an injection molding machine including a power supply regenerative converter connected between an alternating current power supply and an inverter, comprising: an electric power conversion part configured to bidirectionally convert between an alternating current electric power and a direct current electric power; a direct current voltage detector configured to detect a direct current voltage of a capacitor between the inverter and the electric power conversion part; an alternating current control part configured to output a control signal, which is produced based on a direct current voltage detected by the direct current voltage detector and time variance of the direct current voltage, to the electric power conversion part, and configured to control an alternating current flowing between the alternating current power supply and the electric power conversion part.

It is preferable that the alternating current control part outputs to the electric power conversion part a control signal to cancel out an increment of the direct current voltage if the direct current voltage is greater than or equal to a regeneration start voltage. The "regeneration start voltage" is a direct current voltage value in a capacitor to determine whether the power supply regenerative operation can be started or not.

It is preferable that the control signal is outputted so that an alternating current is prevented from flowing from the alternating current power supply to the electric power conversion part independently of change in the direct current voltage, if the direct current voltage is greater than or equal to a predetermined value.

It is preferable that the control signal is outputted so that a ratio of the direct current voltage to a maximum allowable voltage of the capacitor becomes a predetermined ratio at a time of completion of electric power regeneration from the inverter to the capacitor.

A power supply regenerative converter according to an embodiment of the present invention is a power supply regenerative converter connected between an alternating current power supply and an inverter, comprising: an electric power conversion part configured to bidirectionally convert between an alternating current electric power and a direct current electric power; a direct current voltage detector configured to detect a direct current voltage of a capacitor between the inverter and the electric power conversion part; and an alternating current control part configured to output a control signal, which is produced based on a direct current voltage detected by the direct current voltage detector and time variance of the direct current voltage, to the electric power conversion part, and configured to control an alternating current flowing between the alternating current power supply and the electric power conversion part.

### EFFECT OF THE INVENTION

By the above means, the present invention is able to provide an injection molding machine including a power supply regenerative converter which is able to perform a power supply regenerative operation more efficiently and to provide the power supply regenerative converter.

### BRIEF DESCRIPTION OF THE DRAWINGS

Fig. 1 is a diagram showing a configuration of a main part of an injection molding machine according to an embodiment of the present invention.
FIG. 2 is a functional block diagram showing a configuration example of a power supply regenerative converter mounted on an injection molding machine according to an embodiment of the present invention.
FIG. 3 is a functional block diagram showing detail of an AC command calculation part.
FIG. 4 is a diagram showing time variance of the electric power at the motors, the electric power regenerated to a power supply, and a DC voltage.
FIG. 5 is a flowchart showing a flow of the electric power conversion control process.

### MODE FOR CARRYING OUT THE INVENTION

With reference to the drawings, embodiments of the present invention are described in the following.

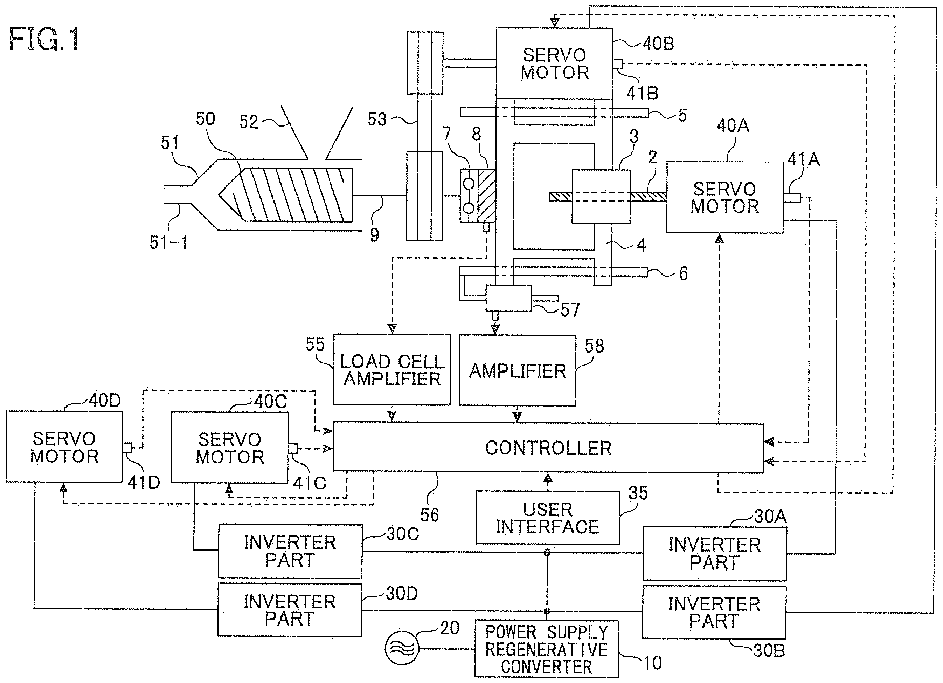

FIG. 1 is a diagram showing a configuration of a main part of an example of an injection molding machine according to an embodiment of the present invention.

The injection molding machine is an electric injection molding machine having a servo motor 40A for injection. Rotation of the servo motor 40A for injection is conveyed to a ball screw 2. A nut 3 moving back and forth due to the rotation of the ball screw 2 is fixed to a pressure plate 4. The pressure plate 4 is movable along guide bars 5, 6 fixed to a base frame (not shown). The back and forth movement of the pressure plate 4 is conveyed to a screw 50 via a bearing 7, a load cell 8, and an injection axis 9. The screw 50 is arranged in a heating cylinder 51 rotatably and axially movably. At the back of the screw 50 in the heating cylinder 51, a hopper 52 for feeding resin is provided. Rotation of a servo motor 40B for screw rotation is conveyed to the injection axis 9 via connecting members 53 such as a belt, a pulley, and the like. That is, the injection axis 9 is rotary driven by the servo motor 40B for screw rotation, and in turn, the screw 50 is rotated.

In the plasticizing/dosing process, the rotating screw 50 moves backward in the heating cylinder 51. Thus, melted resin is stored at the front of the screw 50, i.e., at the side of a nozzle 51-1 of the heating cylinder 51. In the injection process, a molding is conducted by filling melted resin stored at the front of the screw 50 into a mold and pressurizing the filled resin. At this moment, the force pushing the resin is detected by the load cell 8 as reaction force. That is, the pressure of resin at the front of the screw 50 is detected. A detected value of the pressure is amplified by a load cell amplifier 55, and then entered into a controller (control device) 56 which functions as a control means. In the pressure keeping process, resin filled into the mold is kept under a predetermined pressure.

A position detector 57 which is configured to detect movement of the screw 50 is attached to the pressure plate 4. A signal detected by the position detector 57 is amplified by an amplifier 58, and then entered into the controller 56. This detected signal may be used to detect a moving speed of the screw 50.

The servo motors 40A, 40B are provided with encoders 41A, 41B to detect the numbers of revolutions, respectively. The numbers of revolutions detected by the encoders 41A, 41B are entered into the controller 56, respectively.

A servo motor 40C is a servo motor for mold opening and closing. A servo motor 40D is a servo motor for product ejection (i.e., for an ejector). The servo motor 40C achieves the mold opening and closing by driving, for example, a toggle link (not shown). The servo motor 40D achieves the product ejection by moving an ejector rod (not shown) by means of, for example, a ball screw mechanism. The servo motors 40C, 40D are provided with encoders 41C, 41D to detect numbers of revolutions, respectively. The numbers of revolutions detected by the encoders 41C, 41D are entered into the controller 56, respectively.

The controller 56 is built around a micro computer. The controller 56 includes, for example, a CPU, a ROM for storing a control program and the like, a readable and writable RAM for storing a computation result and the like, a timer, a counter, an input interface, an output interface, and the like.

The controller 56 sends out current commands (torque commands) according to each of plural processes to each of the servo motors 40A-40D. For example, the controller 56 achieves the plasticizing/dosing process by controlling the number of revolutions of the servo motor 40B. Also, the controller 56 achieves the injection process and the pressure keeping process by controlling the number of revolutions of the servo motor 40A. Similarly, the controller 56 achieves the mold opening process and the mold closing process by controlling the number of revolutions of the servo motor 40C. Moreover, the controller 56 achieves the product ejecting process by controlling the number of revolutions of the servo motor 40D.

A user interface 35 is provided with an input setting part by which a user can configure a molding condition for each molding process such as the mold opening and closing processes, the injection process, and the like. Also, for an after-mentioned electric power consumption calculation, the user interface 35 is provided with an input part to input a molding condition for each molding process such as the mold opening and closing processes, the injection process, and the like. In addition, the user interface 35 is provided with an input part to input a variety of instructions by the user, and an output part (e.g., a display part) to output a variety of information to the user.

Typically, one cycle of injection molding in the injection molding machine includes a mold closing process to close a mold, a mold clamping process to clamp the mold, a nozzle touch process to press the nozzle 51-1 against a sprue (not shown) of the mold, an injection process to inject melted material stored at the front of the screw 50 into a mold cavity (not shown) by advancing the screw 50 in the heating cylinder 51, a pressure keeping process to apply hold pressure for a while in order to inhibit generation of air bubbles and dents due to mold shrinkage, a plasticizing/dosing process to melt resin and store resin at the front of the heating cylinder 51 by rotating the screw 50 for a next cycle while the melted material filled in the mold cavity is cooled and solidified, a mold opening process to open the mold in order to eject the solidified product from the mold, and a product ejecting process to eject the product by an ejector pin (not shown) installed in the mold.

The power supply regenerative converter 10 is configured to convert an AC power of an AC power supply 20 into a DC power. For example, the power supply regenerative converter 10 is connected between the AC power supply 20 and plural inverter parts 30A, 30B, ··· (hereinafter also collectively referred to as "inverter parts 30". The same goes for "motors 40", after-mentioned "electric power conversion parts 31", and after-mentioned "capacitors 32".).

The AC power supply 20 is, for example, a commercial three phase AC power supply. The AC power supply 20 supplies the power supply regenerative converter 10 with an alternating current.

The inverter parts 30 are configured to convert a DC power from the power supply regenerative converter 10 into an AC power, and to supply a variety of loads with the AC power, respectively. For example, the inverter parts 30 are servo cards including electric power conversion parts 31 (31A, 31B, ···) consisting of a switching element which can bidirectionally convert between a DC power and an AC power, and capacitors 32 (32A, 32B, ···). The inverter parts 30 supply each of the motors 40 (40A, 40B, ···) with an alternating current. In the present embodiment, the inverter part 30A is connected to the servo motor 40A for injection, the inverter part 30B is connected to the servo motor 40B for screw rotation, the inverter part 30C is connected to the servo motor 40C for mold opening and closing, and the inverter part 30D is connected to the servo motor 40D for an ejector. The power supply regenerative converter 10 may be connected to one and only inverter part 30.

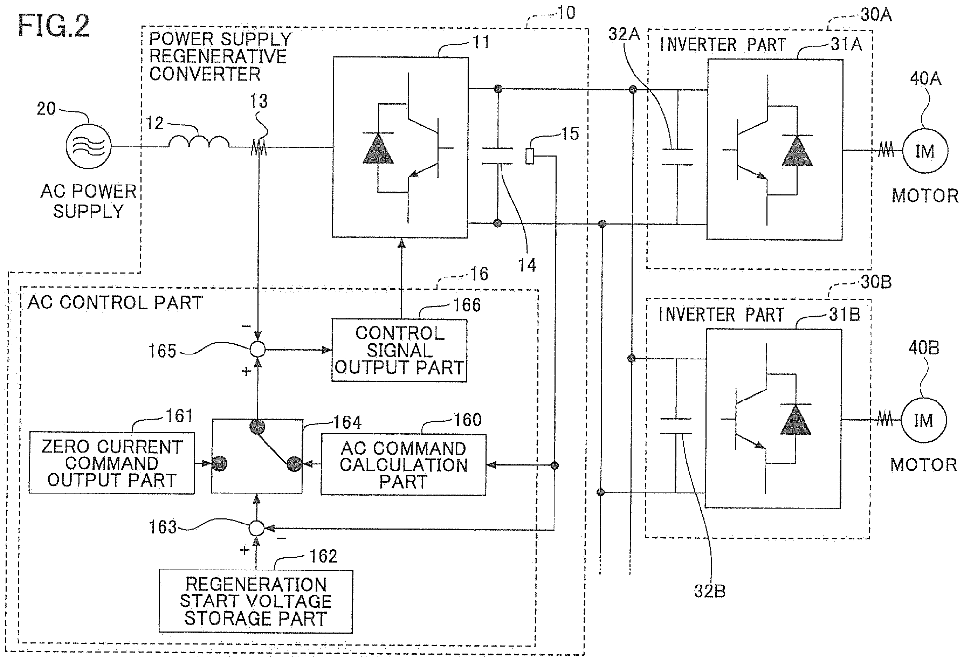

FIG. 2 is a functional block diagram showing a configuration example of the power supply regenerative converter 10 mounted on an injection molding machine according to an embodiment of the present invention.

The power supply regenerative converter 10 includes an electric power conversion part 11, an AC reactor 12, an AC detector 13, a DC link capacitor 14, a DC voltage detector 15, and an AC control part 16.

The electric power conversion part 11 is configured to bidirectionally convert between an AC power and a DC power. For example, the electric power conversion part 11 is a switching element consisting of an Insulated Gate Bipolar Transistor (IGBT).

Specifically, the electric power conversion part 11 performs a conversion operation from a DC power in the DC link capacitor 14 into an AC power in the AC power supply 20 (i.e., a power supply regenerative operation) by means of a Pulse Width Modulation (PWM) control according to a control signal from an after-mentioned AC control part 16. Then, in the power supply regenerative operation, the electric power conversion part 11 controls the magnitude of an AC power (an alternating current) between the AC power supply 20 and the electric power conversion part 11 as well as the magnitude of a DC power (a DC voltage) between the DC link capacitor 14 and the electric power conversion part 11. Also, the electric power conversion part 11 performs a conversion operation from an AC power into a DC power in the DC link capacitor 14 (i.e., a power-running operation) by means of a diode rectification.

The AC reactor 12 is a passive element utilizing a winding wire. For example, as one of its functions, the AC reactor 12 inhibits a harmonic current flowing from the power supply regenerative converter 10 to the AC power supply 20 during the power supply regenerative operation.

The AC detector 13 is configured to detect the magnitude of an alternating current flowing between the electric power conversion part 11 and the AC power supply 20. The AC detector 13 outputs its detection value to the after-mentioned AC control part 16. Also, the AC detector 13 detects and outputs an AC value at a predetermined frequency, and stores and retains in a storage medium such as a RAM each of values detected at the predetermined frequency over a predetermined time period. Also, in the present embodiment, this alternating current is represented as a positive value if it flows from the power supply regenerative converter 10 to the AC power supply 20, and represented as a negative value if it flows from the AC power supply 20 to the power supply regenerative converter 10.

The DC link capacitor 14 is configured to charge a DC power transferred to and from the inverter parts 30. By the power supply regenerative converter 10, electric power is supplied to the DC link capacitor 14 from the AC power supply 20 so that the DC link capacitor 14 can maintain a predetermined voltage value (e.g., a crest value of power supply voltage of the AC power supply 20, hereinafter referred to as "charging voltage".).

The DC voltage detector 15 is configured to detect a DC voltage of the DC link capacitor 14. The DC voltage detector 15 outputs its detection value to the after-mentioned AC control part 16. Also the DC voltage detector 15 detects and outputs a DC voltage value at a predetermined frequency, and stores and retains in a storage medium such as a RAM each of values detected at the predetermined frequency over a predetermined time period.

The AC control part 16 is configured to control the direction and magnitude of an alternating current between the electric power conversion part 11 and the AC power supply 20. For example, the AC control part 16 is a computer including a CPU, a RAM, a ROM, a NVRAM, and the like. The AC control part 16 stores in the ROM programs corresponding to each of an AC command calculation part 160, a zero current command output part 161, a regeneration start voltage storage part 162, a computation part 163, an output switch part 164, a computation part 165, and a control signal output part 166. Then, the AC control part 16 causes the CPU to perform processes corresponding to each of the above parts, and outputs a control signal to the electric power conversion part 11 in order to achieve a desired direction and a desired magnitude of an alternating current.

Also, the above parts in the AC control part 16 may be comprised of hardware by means of an analog circuit, a digital circuit, a Programmable Logic Device (PLD), a Field Programmable Gate Array (FPGA), a Field Programmable Analog Array (FPAA), or the like.

Also, in the present embodiment, the AC control part 16 is configured as a functional element installed in the power supply regenerative converter 10. However, the AC control part 16 may be configured as a functional element installed in the controller 56 (see FIG. 1).

The AC command calculation part 160 is an element to calculate an AC command value corresponding to time variance of a DC voltage of the DC link capacitor 14 detected by the DC voltage detector 15.

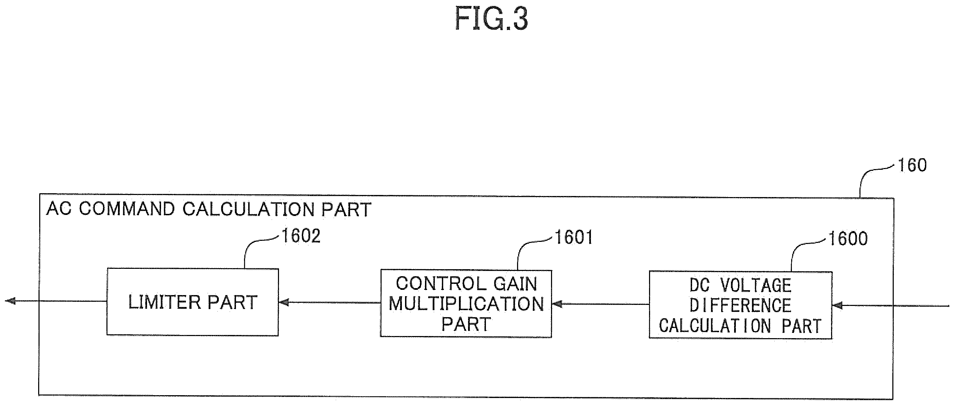

FIG. 3 is a functional block diagram showing detail of the AC command calculation part 160. The AC command calculation part 160 includes a DC voltage difference calculation part 1600, a control gain multiplication part 1601, and a limiter part 1602.

Specifically, in the AC command calculation part 160, the DC voltage difference calculation part 1600 calculates the difference ΔV between a DC voltage value V_{PRV} detected by the DC voltage detector 15 at a previous control cycle and a DC voltage value V_{CRT} detected at a present control cycle. The DC voltage value V_{PRV} has been stored, for example, in the RAM. Also, the DC voltage value V_{PRV} may be a value detected several control cycles ago. Also, the difference ΔV may be either an incremental or a decremental. Then, the DC voltage difference calculation part 1600 calculates an AC command value A_{TMP} by adding an AC value A_{DIFF} corresponding to the calculated ΔV to an AC value A_{PRV} detected by the AC detector 13 at the previous control cycle. The AC value A_{PRV} has been stored, for example, in the RAM. Also, the AC value V_{PRV} may be a value detected several control cycles ago. Then, the DC voltage difference calculation part 1600 outputs the calculated AC command value A_{TMP} to the control gain multiplication part 1601.

Subsequently, in the AC command calculation part 160, the control gain multiplication part 1601 multiplies the AC command value V_{TMP} by a predetermined control gain which depends on the sign (positive or negative) or the magnitude of the difference ΔV. Then, the control gain multiplication part 1601 outputs the AC command value A_{TMP} multiplied by the control gain to the limiter part 1602.

Subsequently, in the AC command calculation part 160, the limiter part 1602 compares the AC command value A_{TMP} and a minimum allowable value A_{MIN}, and compares the AC command value A_{TMP} and a maximum allowable value A_{MAX}. Then, the limiter part 1602 outputs the AC command value A_{TMP} as the target AC command value A_{TGT} to the output switch part 164 while limiting the AC command value A_{TMP} between the minimum allowable value A_{MIN} and the maximum allowable value A_{MAX}.

Also, the minimum allowable value A_{MIN} is set to, for example, a value of zero. In the present embodiment, an alternating current having a negative value represents an alternating current flowing (in a power-running direction) from the AC power supply 20 to the power supply regenerative converter 10, while an alternating current having a positive value represents an alternating current flowing (in a regenerative direction) from the power supply regenerative converter 10 to the AC power supply 20. In this case, by setting the minimum allowable value A_{MIN} to a value of zero, the AC control part 16 can restrict a direction of an alternating current only to the regenerative direction, and can prevent the power-running operation.

Also, the maximum allowable value A_{MAX} is set to, for example, an AC value which is less than or equal to a maximum allowable alternating current in the power supply regenerative converter 10, or an AC value which is calculated so that a ratio of a DC voltage of the DC link capacitor 14 to a maximum allowable DC voltage of the DC link capacitor 14 becomes a predetermined ratio (90 % for example) when electric power regeneration from the motors 40 is completed.

Also, both the minimum allowable value A_{MIN} and the maximum allowable value A_{MAX} are preliminarily stored in a non-volatile storage medium such as a NVRAM, a ROM, or the like. They can be either modifiable or nonmodifiable.

The zero current command output part 161 is an element to stop a power supply regenerative operation which is presently being performed, or to output an AC command value for preventing a power supply regenerative operation from starting. For example, the zero current command output part 161 outputs an AC command value A₀ (a value of zero) as a target AC command value A_{TGT} to the output switch part 164.

The regeneration start voltage storage part 162 is an element to store a DC voltage value in the DC link capacitor 14 (a regeneration start voltage) on whether a power supply regenerative operation can be started or not is determined. For example, the regeneration start voltage storage part 162 is a storage area defined at a non-volatile storage medium such as a NVRAM, a ROM, or the like. The storage area can be either rewritable or nonrewritable. Also, the regeneration start voltage is set to, for example, a value which is slightly higher than a crest value of the power supply voltage of the AC power supply 20. This is to start a power supply regenerative operation as early as possible in a case where electric power from the motors 40 are regenerated to the DC link capacitor 14. The DC link capacitor 14 normally has a charging voltage which is equal to the crest value.

The computation part 163 is an element to calculate the difference between a present DC voltage value V_{CRT} in the DC link capacitor 14 detected by the DC voltage detector 15 and the regeneration start voltage stored in the regeneration start voltage storage part 162. For example, the computation part 163 outputs to the output switch part 164 a value obtained by subtracting the present DC voltage value V_{CRT} from the regeneration start voltage.

The output switch part 164 is an element to switch its output so that it can output a target AC command value A_{TGT} from the AC command calculation part 160 if the present DC voltage value V_{CRT} in the DC link capacitor 14 is greater than or equal to the regeneration start voltage, while it can output a target AC command value A_{TGT} from the zero current command output part 161 if the present DC voltage value V_{CRT} in the DC link capacitor 14 is less than the regeneration start voltage.

Specifically, the output switch part 164 outputs to the computation part 165 the target AC command value A_{TGT} from the AC command calculation part 160 if an output value of the computation part 163 is a negative value (i.e., if the present DC voltage value V_{CRT} is greater than or equal to the regeneration start voltage). While, the output switch part 164 outputs to the computation part 165 the target AC command value A_{TGT} from the zero current command output part 161 if an output value of the computation part 163 is a positive value (i.e., if the present DC voltage value V_{CRT} is less than the regeneration start voltage).

The computation part 165 is an element to calculate the difference ΔA between a present AC value A_{CRT} detected by the AC detector 13 and the target AC command value A_{TGT} from the output switch part 164. The difference ΔA may be either an incremental or a decremental. For example, the computation part 165 outputs to the control signal output part 166 a value ΔA obtained by subtracting the present AC value A_{CRT} from the target AC command value A_{TGT}.

The control signal output part 166 outputs to the electric power conversion part 11 a control signal corresponding to the value ΔA received from the computation part 165 by means of a PI control so that an alternating current represented by the target AC command value A_{TGT} can actually flow between the electric power conversion part 11 and the AC power supply 20.

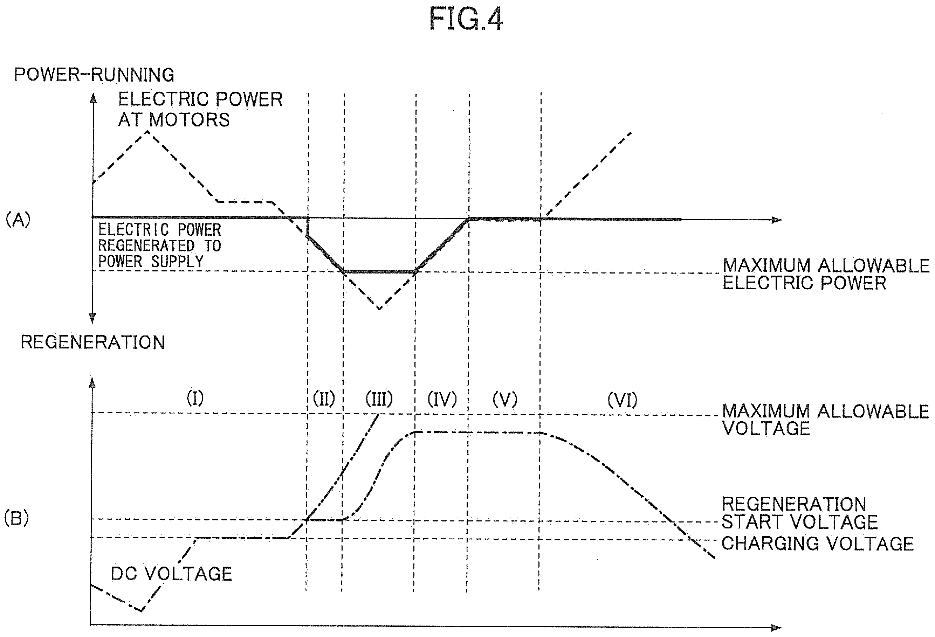

Next, referring to FIG. 4, time variances of electric power at the motors, electric power regenerated to a power supply, and a DC voltage will be explained.

FIG. 4(A) is a diagram showing time variances of electric power at the motors and electric power regenerated to a power supply. The electric power at the motors corresponds to the total electric power transferred between the electric power conversion part 11 and each of the motors 40. The electric power regenerated to a power supply is electric power returned from the power supply regenerative converter 10 to the AC power supply 20. To simplify an explanation, electric power charged into the DC link capacitor 14 is omitted from the electric power regenerated to a power supply. An area above a time axis (an abscissa axis) represents a power-running state, while an area below the time axis (the abscissa axis) represents a regeneration state. Hereinafter, the area above the time axis is referred to as a "power-running area", and the area below the time axis is referred to as a "regeneration area".

Also, FIG. 4(B) shows a time variance of a DC voltage of the DC link capacitor 14. Its time axis (its abscissa axis) corresponds to that of FIG. 4(A).

The time variances of electric power at the motors, electric power regenerated to a power supply, and DC voltage are divided into plural phases by plural dashed lines parallel to a vertical axis. A phase (I) corresponds to a state where the power supply regenerative converter 10 is in a resting state. A phase (II) corresponds to a state after the power supply regenerative converter 10 has started the power supply regenerative operation.

A phase (III) corresponds to a state of the power supply regenerative operation after electric power (an alternating current) regenerated from the motors 40 has exceeded a maximum allowable electric power (a maximum allowable alternating current) which can be transferred from the power supply regenerative converter 10 to the AC power supply 20. A phase (IV) corresponds to a state of the power supply regenerative operation after electric power (an alternating current) regenerated from the motors 40 has fallen below the maximum allowable electric power (the maximum allowable alternating current) again.

A phase (V) corresponds to a resting state (a state where both the power-running operation and the power supply regenerative operation are not being performed) after electric power (an alternating current) regenerated from the motors 40 has become zero. A phase (VI) corresponds to a state of the power-running operation after drive of the motors 40 has been started.

In the phase (I), the power supply regenerative converter 10 supplies electric power from the AC power supply 20 to the DC link capacitor 14 if a present DC voltage value V_{CRT} detected by the DC voltage detector 15 has fallen below the charging voltage so that the power supply regenerative converter 10 can raise the DC voltage value to a value of the charging voltage.

Also, in the power supply regenerative converter 10, the zero current command output part 161 in the AC control part 16 outputs the AC command value A₀ (a value of zero) as the target AC command value A_{TGT} if the present DC voltage value V_{CRT} is less than the regeneration start voltage even if electric power from the motors 40 is regenerated. Then, the control signal output part 166 outputs to the electric power conversion part 11 a control signal corresponding to the difference ΔA between the target AC command value A_{TGT} and a present AC value A_{CRT} detected by the AC detector 13. Thus, the power supply regenerative converter 10 stores in the DC link capacitor 14 electric power from the motors 40 while preventing the power supply regenerative operation from being started.

As a result, a DC voltage indicated by a dashed-dotted line in FIG. 4(B) is raised to a level of the charging voltage if it has fallen below the charging voltage. Also, the DC voltage increases at a rate according to change in the electric power at the motors if the electric power at the motors indicated by a dashed line in FIG. 4(A) has reached the regeneration area.

Subsequently, in the phase (II), the AC command calculation part 160 in the AC control part 16 in the power supply regenerative converter 10 calculates the difference ΔV between a DC voltage value V_{PRE} detected at a previous control cycle and a DC voltage value V_{CRT} detected at a present control cycle if the present DC voltage value V_{CRT} has exceeded the regeneration start voltage. Then, the AC command calculation part 160 outputs a target AC command value A_{TGT} corresponding to the difference ΔV in order to cancel out the difference ΔV (in order to decrease the difference ΔV to zero). Then, the control signal output part 166 outputs to the electric power conversion part 11 a control signal corresponding to the difference ΔA between the target AC command value A_{TGT} and a present AC value A_{CRT} detected by the AC detector 13.

As a result, electric power regenerated to a power supply indicated by a solid line in FIG. 4(A) increases (moves downward in FIG. 4(A)) in the regeneration area along with electric power at the motors indicated by a dashed line in FIG. 4(A). In this way, electric power regenerated from the motors 40 to the DC link capacitor 14 is entirely regenerated to the AC power supply 20. Hence, a DC voltage indicated by a dashed-dotted line in FIG. 4(B) remains at a level of a value of the regeneration start voltage.

The dashed-two dotted line in FIG. 4(B) indicates time variance of a DC voltage in a case where the power supply regenerative operation is not performed.

Subsequently, in the phase (III), if an alternating current flowing from the power supply regenerative converter 10 to the AC power supply 20 has reached the maximum allowable value A_{MAX,} the power supply regenerative converter 10 sets a target AC command value A_{TGT} calculated by the AC command calculation part 160 to the maximum allowable value A_{MAX}, and limits the alternating current flowing from the power supply regenerative converter 10 to the AC power supply 20. In this way, the power supply regenerative converter 10 stores in the DC link capacitor 14 an electric power P3 which is a part of an electric power P1 regenerated from the motors 40 to the DC link capacitor 14. The electric power P3 is not returned to the AC power supply 20, and corresponds to the difference between the electric power P1 regenerated from the motors 40 to the DC link capacitor 14 and an electric power P2 (P2<P1) regenerated from the power supply regenerative converter 10 to the AC power supply 20 (P3=P1-P2).

As a result, a DC voltage indicated by a dashed-dotted line in FIG. 4(B) increases at a rate corresponding to the difference between the electric power regenerated to a power supply indicated by a solid line in FIG. 4(A) and the electric power at the motors indicated by a dashed line in FIG. 4(A). The electric power regenerated to a power supply remains constant at a level of the maximum allowable electric power corresponding to the maximum allowable value A_{MAX}.

Subsequently, in the phase (IV), as a result of decreased electric power P1, if the power supply regenerative converter 10 has returned to a state where it can regenerate all of the electric power P1 to the AC power supply 20 while maintaining an alternating current flowing from the power supply regenerative converter 10 to the AC power supply 20 at a value less than or equal to the maximum allowable value A_{MAX}, as in the operation in the phase (II), the AC command calculation part 160 outputs the target AC command value A_{TGT} corresponding to the difference ΔV in order to cancel out the difference ΔV (in order to decrease the difference ΔV to zero). Then, the control signal output part 166 outputs to the electric power conversion part 11 a control signal corresponding to the difference ΔA between the target AC command value A_{TGT} and a present AC value A_{CRT} detected by the AC detector 13.

As a result, electric power regenerated to a power supply indicated by a solid line in FIG. 4(A) decreases (moves upward in FIG. 4(A)) in the regeneration area along with electric power at the motors indicated by a dashed line in FIG. 4(A). Thus, the electric power P1 regenerated from the motors 40 to the DC link capacitor 14 is entirely regenerated to the AC power supply 20. Hence, a DC voltage indicated by a dashed-dotted line in FIG. 4(B) remains at a constant value.

Subsequently, in the phase (V), even after the electric power P1 has reached zero, as in the operations in the phases (II) and (IV), the AC command calculation part 160 in the power supply regenerative converter 10 outputs the target AC command value A_{TGT} corresponding to the difference ΔV in order to cancel out the difference ΔV (in order to decrease the difference ΔV to zero). Then, the control signal output part 166 outputs to the electric power conversion part 11 a control signal corresponding to the difference ΔA between the target AC command value A_{TGT} and a present AC value ACRT detected by the AC detector 13.

As a result, electric power regenerated to a power supply indicated by a solid line in FIG. 4(A) remains at zero on the abscissa axis along with electric power at the motors indicated by a dashed line. Also, a DC voltage indicated by a dashed-dotted line in FIG. 4(B) remains at a constant value.

Subsequently, in the phase (VI), if drive of the motors 40 has been resumed, the AC command calculation part 160 in the power supply regenerative converter 10 calculates the difference Av as in the preceding phases. However, in this case, the difference ΔV and the target AC command value A_{TGT} corresponding to the difference ΔV are negative value, the AC command calculation part 160 in the AC control part 16 outputs the minimum allowable value AMIN (a value of zero) as the target AC command value A_{TGT}. Then, the control signal output part 166 outputs to the electric power conversion part 11 a control signal corresponding to the difference ΔA between the target AC command value A_{TGT} (a value of zero) and a present AC value A_{cRT} detected by the AC detector 13. That is, the power supply regenerative converter 10 prevents both the power-running operation and the power supply regenerative operation from being started.

As a result, a DC voltage indicated by a dashed- dotted line in FIG. 4(B) decreases with the increase in a value of electric power at the motors in the power-running area shown in FIG. 4(A) .

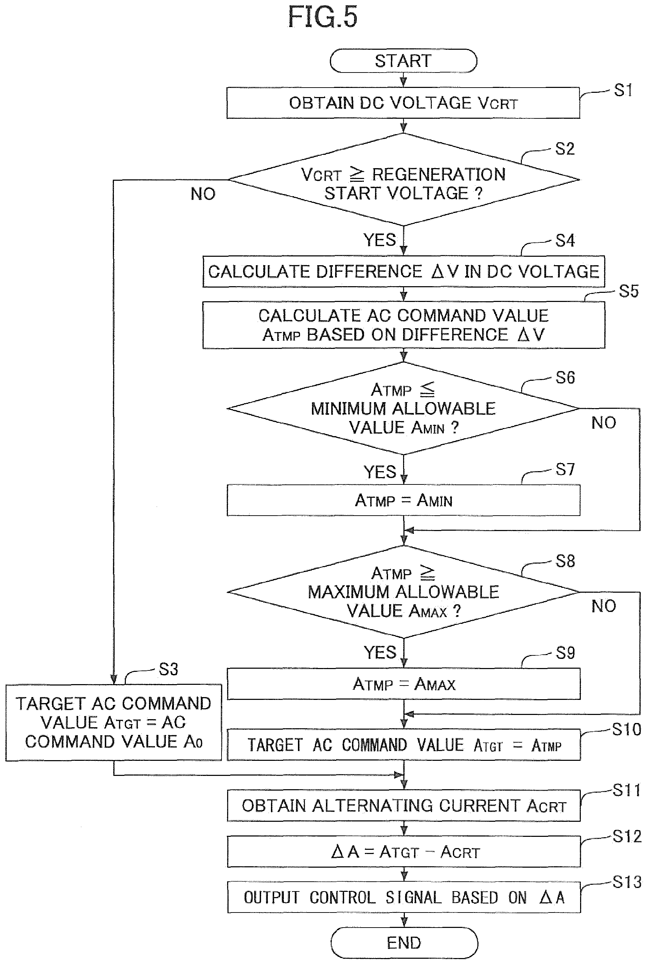

Next, referring to FIG. 5, a process where the power supply regenerative converter 10 controls an operation of the electric power conversion part 11 (hereinafter referred to as "electric power conversion control process") will be explained. FIG. 5 is a flowchart showing a flow of the electric power conversion control process. The power supply regenerative converter 10 executes this process repeatedly at a predetermined frequency.

Firstly, the AC control part 16 obtains a present DC voltage value V_{CRT} in the DC link capacitor 14 detected by the DC voltage detector 15 (step S1). Then, the AC control part 16 stores the obtained value in a RAM.

Subsequently, the AC control part 16 determines whether the present DC voltage value V_{CRT} detected by the DC voltage detector 15 is greater than or equal to a regeneration start voltage stored in the regeneration start voltage storage part 162 (step S2).

Specifically, the computation part 163 in the AC control part 16 subtracts the present DC voltage value V_{CRT} from the regeneration start voltage, and outputs the subtraction result to the output switch part 164. If the subtraction result is a negative value, the output switch part 164 determines that the present DC voltage value V_{CRT} is greater than the regeneration start voltage.

If the output switch part 164 determines that the present DC voltage value V_{CRT} is less than the regeneration start voltage (NO in step S2), the output switch part 164 in the AC control part 16 sets as a target AC command value A_{TGT} an AC command value A₀ (e.g., a value of zero) from the zero current command output part 161 (step S3). This is to prevent the power supply regenerative operation from being started.

If the output switch part 164 determines that the present DC voltage value V_{CRT} is greater than or equal to the regeneration start voltage (YES in step S2), the AC command calculation part 160 in the AC control part 16 calculates the difference ΔV by subtracting a DC voltage value V_{PRV} detected at a previous control cycle and stored in the RAM from the present DC voltage value V_{CRT} (step S4). If there is no value detected at the previous control cycle, a value of the charging voltage is used as the DC voltage value V_{PRV}. The DC voltage value V_{PRV} may be a value detected several control cycles ago.

Subsequently, the AC command calculation part 160 in the AC control part 16 calculates an AC command value A_{TMP} by adding an AC value corresponding to the difference ΔV to an AC value A_{PRV} detected by the AC detector 13 at the previous control cycle (step S5). If there is no value detected at the previous control cycle, a value of zero is used as the AC value A_{PRV}. The AC value A_{PRV} may be a value detected several control cycles ago.

Subsequently, the AC command calculation part 160 in the AC control part 16 determines whether the calculated AC command value A_{TMP} is less than or equal to a minimum allowable value A_{MIN} or not (step S6). If it is less than or equal to the minimum allowable value A_{MIN} (YES in step S6), the AC command calculation part 160 replaces the AC command value A_{TMP} by the minimum allowable value A_{MIN} (step S7). If it is greater than the minimum allowable value A_{MIN} (NO in step S6), the AC command calculation part 160 adopts the AC command value A_{TMP} without any change.

Subsequently, the AC command calculation part 160 in the AC control part 16 determines whether the calculated AC command value A_{TMP} is greater than or equal to a maximum allowable value A_{MAX} (step S8). If it is greater than or equal to the maximum allowable value A_{MAX} (YES in step S8), the AC command calculation part 160 replaces the AC command value A_{TMP} by the maximum allowable value A_{MAX} (step S9). If it is less than the maximum allowable value A_{MAX} (NO in step S8), the AC command calculation part 160 adopts the AC command value A_{TMP} without any change. The processes in steps S6 and S7 and the processes in steps S8 and S9 are in no particular order. They may be executed simultaneously.

Subsequently, the AC control part 16 sets the AC command value A_{TMP} as a target AC command value A_{TGT} (step S10) .

After the output switch part 164 has set the AC command value A₀ or the AC command value A_{TMP} as the target AC command value A_{TGT}, the AC control part 16 obtains a present AC value A_{CRT}, which flows between the electric power conversion part 11 and the AC power supply 20, detected by the AC detector 13 (step S11), and stores the obtained value A_{CRT} in the RAM.

Subsequently, the computation part 165 in the AC control part 16 calculates the difference ΔA by subtracting the present AC value A_{CRT} from the target AC command value A_{TGT} (step S12). Then, the control signal output part 166 produces a control signal corresponding to the difference ΔA, and outputs the produced control signal to the electric power conversion part 11 (step S13).

When the electric power conversion part 11 receives the control signal, the electric power conversion part 11 activates a switching element and changes the duty cycle of a pulse width in the PWM control so that a value of an alternating current flowing from the power supply regenerative converter 10 to the AC power supply 20 can reach the target AC command value A_{TGT}.

According to a flow like the one mentioned above, the power supply regenerative converter 10 is able to control an operation of the electric power conversion part 11.

By means of the above configuration, the power supply regenerative converter 10 regenerates to the AC power supply 20 an increment of electric power in the DC link capacitor 14 increased by regeneration from the motors 40 to the DC link capacitor 14. Thus, the power supply regenerative converter 10 can prevent wasteful transfer of electric power such as that the electric power regenerated from the DC link capacitor 14 to the AC power supply 20 is consumed again immediately after the regeneration. Hence, the power supply regenerative converter 10 can perform the power supply regenerative operation more efficiently.

Also, the power supply regenerative converter 10 regenerates to the AC power supply 20 an increment of electric power in the DC link capacitor 14 increased by regeneration from the motors 40 to the DC link capacitor 14. Thus, the power supply regenerative converter 10 can prevent a DC voltage of the DC link capacitor 14 from falling below the regeneration start voltage immediately after the DC voltage has exceeded the regeneration start voltage even if the regeneration start voltage is set to a relatively low value (e.g., even if the regeneration start voltage is set to a value which is slightly higher than the charging voltage). Hence, the power supply regenerative converter 10 does not have to set the regeneration start voltage to a higher value in order to prevent chattering, and can start the power supply regenerative operation earlier.

Also, the power supply regenerative converter 10 controls the electric power conversion part 11 to cancel out an increase in a DC voltage of the DC link capacitor 14. Thus, the power supply regenerative converter 10 can start the power supply regenerative operation at a stage where electric power regenerated from the inverter parts 30 to the DC link capacitor 14 is low. Hence, the power supply regenerative converter 10 can reliably regenerate the electric power generated by the inverter parts 30 to the AC power supply 20 or the DC link capacitor 14 even after the electric power regenerated from the inverter parts 30 to the DC link capacitor 14 has increased while preventing a DC voltage of the DC link capacitor 14 from reaching its maximum allowable voltage promptly.

Also, the power supply regenerative converter 10 controls the electric power conversion part 11 in order to cancel out an increment of a DC voltage of the DC link capacitor 14 while preventing the DC voltage from decreasing. Thus, the power supply regenerative converter 10 maintains a level of the DC voltage of the DC link capacitor 14 even if the electric power regenerated from the inverter parts 30 to the DC link capacitor 14 decreases. Also, the power supply regenerative converter 10 stops the power supply regenerative operation when the regeneration from the inverter parts 30 to the DC link capacitor 14 is completed. Hence, the power supply regenerative converter 10 can prevent the electric power stored in the DC link capacitor 14 from being unnecessarily regenerated to the AC power supply 20.

In this way, the power supply regenerative converter 10 controls the electric power conversion part 11 to cancel out an increment of a DC voltage of the DC link capacitor 14 until the electric power regenerated to a power supply reaches the maximum allowable electric power. After the electric power regenerated to a power supply has reached the maximum allowable electric power, the power supply regenerative converter 10 stores an excess (electric power P3) in the DC link capacitor 14. Then, after the electric power regenerated to a power supply has again fallen below the maximum allowable electric power, the power supply regenerative converter 10 controls the electric power conversion part 11 to cancel out the increment while preventing the DC voltage of the DC link capacitor 14 from decreasing. Thus, the power supply regenerative converter 10 can leave a predetermined electric power in the DC link capacitor 14 at the time of completion of the regeneration from the inverter parts 30 to the DC link capacitor 14.

Also, the power supply regenerative converter 10 sets as the maximum allowable electric power a predetermined AC value which is calculated so that a ratio of a DC voltage of the DC link capacitor 14 to a maximum allowable DC voltage of the DC link capacitor 14 at the time of completion of the regeneration from the inverter parts 30 to the DC link capacitor 14 reaches a predetermined ratio (a target value). Thus, the power supply regenerative converter 10 can bring a DC voltage of the DC link capacitor 14 at the time of completion of the regeneration from the inverter parts 30 to the DC link capacitor 14 to the target value.

Also, the power supply regenerative converter 10 prevents the power-running operation (i.e., the electric power distribution from the AC power supply 20 to the power supply regenerative converter 10) from being performed in spite of the fact that a DC voltage of the DC link capacitor 14 is sufficient. Thus, the power supply regenerative converter 10 can further reduce unnecessary transfer of electric power between the electric power conversion part 11 and the AC power supply 20.

Also, the power supply regenerative converter 10 controls the electric power conversion part 11 while monitoring a DC voltage of the DC link capacitor 14 and an alternating current flowing between the electric power conversion part 11 and the AC power supply 20. Thus, the power supply regenerative converter 10 can control the electric power conversion part 11 without knowing operating states of each of the plural motors 40 in detail.

A preferable embodiment of the present invention has been described in detail as above. A variety of modifications and substitutions to the above described embodiment can be made without departing from the scope of the claims.

For example, in the above embodiment, if electric power at the motors in the regeneration area has exceeded the maximum allowable electric power, the power supply regenerative converter 10 stores in the DC link capacitor 14 surplus electric power while maintaining the electric power regenerated to a power supply at the maximum allowable electric power. However, in the regeneration area, the power supply regenerative converter 10 may store in the DC link capacitor 14 more surplus electric power while maintaining the electric power regenerated to a power supply at an electric power level lower than the maximum allowable electric power. Thus, the power supply regenerative converter 10 can cause a DC voltage of the DC link capacitor 14 to increase earlier. Hence, the power supply regenerative converter 10 can bring the DC voltage of the DC link capacitor 14 at the time of completion of the regeneration from the motors 40 to a higher level.

Also, the power supply regenerative converter 10 may set contents of the power supply regenerative operation based on a cycle pattern of an injection molding machine. Specifically, for example, the power supply regenerative converter 10 may set the maximum allowable electric power, the regeneration start voltage, the charging voltage, the minimum allowable value A_{MIN}, the maximum allowable value A_{MAX}, the AC command value A₀, and the like, during the power supply regenerative operation, for each of a variety of processes in the injection molding machine such as the plasticizing/dosing process, the nozzle touch process, the injection process, the pressure-keeping process, the mold opening process, the mold closing process, the product ejecting process, and the like.

### EXPLANATION OF REFERENCES

- 1: injection molding machine
- 2: ball screw
- 3: nut
- 4: pressure plate
- 5, 6: guide bar
- 7: bearing
- 8: load cell
- 9: injection axis
- 10: power supply regenerative converter
- 11: electric power conversion part
- 12: AC reactor
- 13: AC detector
- 14: DC link capacitor
- 15: DC voltage detector
- 16: AC control part
- 20: AC power supply
- 30, 30A-30D: inverter parts
- 31, 31A, 31B: electric power conversion parts
- 32, 32A, 32B: capacitors
- 40, 40A-40D: motors
- 41, 41A-41D: encoders
- 50: screw
- 51: heating cylinder
- 51-1: nozzle
- 52: hopper
- 53: connecting member
- 55: load cell amplifier
- 56: controller
- 57: position detector
- 58: amplifier
- 160: AC command calculation part
- 161: zero current command output part
- 162: regeneration start voltage storage part
- 163: computation part
- 164: output switch part
- 165: computation part
- 166: control signal output part
- 1600: DC voltage difference calculation part
- 1601: control gain multiplication part
- 1602: limiter part

## Claims

1. An injection molding machine (1) including a power supply regenerative converter connected between an alternating current power supply (20) and an inverter (30), the power supply regenerative converter comprising:
a capacitor (14);
an electric power conversion part (11), having an input connected to an alternative current power source (20) and an output connected to the capacitor (14), and configured to bidirectionally convert between the alternating current electric power source (20) and the direct current electric power in the capacitor (14),
a direct current voltage detector (15) configured to detect a direct current voltage of the capacitor (14) ;
an AC detector (13) configured to detect the magnitude of an alternating current flowing between the electric power conversion part (11) and the alternating current power source (20),
an alternating current control part (16) configured to output a control signal, which is produced based on a direct current voltage detected by the direct current voltage detector (15) and time variance of the direct current voltage, to the electric power conversion part (11), and configured to control an alternating current flowing between the alternating current power supply (20) and the electric power conversion part (11),
wherein, in a case where the direct current voltage is greater than or equal to a regeneration start voltage, the power supply regenerative converter is arranged to:
calculate a difference (ΔV) between a direct current voltage detected at a previous control cycle and a direct current voltage detected at a present control cycle,
output a target alternating current command value (ATGT) corresponding to the difference (ΔV), wherein, if the current command value is above a maximum allowable value (Amax), the target alternating current command value (ATGT) is set at the maximum allowable value (Amax), if the current command value is below a minimum allowable value (Amin), the target alternating current command value (ATGT) is set at the minimum allowable value (Amin), and wherein the target alternating current command value (ATGT) is set at the minimum allowable value (Amin) if the difference (ΔV) is negative,
output a control signal to the electric power conversion part (11) corresponding to a difference (ΔA) between the target alternating current command value and a present alternating current value measured by the AC detector (13),
and
in a case where an alternating current flowing from the power supply regenerative converter to the alternating current power supply (20) reaches a maximum allowable value, the power supply regenerative converter is arranged to set the target alternating current command value to a maximum allowable value (Amax), and store to the capacitor (14) an electric power which is a part of an electric power regenerated to the capacitor (14) in a way of limiting the alternating current flowing from the power supply regenerative converter to the alternating current power supply (20), is not returned to the alternating current power supply (20), and corresponds to a difference between the electric power regenerated to the capacitor (14) and an electric power regenerated to the alternating current power supply (20).

2. The injection molding machine (1) as claimed in claim 1, wherein the alternating current control part (16) outputs to the electric power conversion part (11) a control signal to cancel out an increment of the direct current voltage if the direct current voltage is greater than or equal to a regeneration start voltage.

3. The injection molding machine (1) as claimed in claim 1, wherein the control signal is outputted so that an alternating current is prevented from flowing from the alternating current power supply (20) to the electric power conversion part (11) independently of change in the direct current voltage, if the direct current voltage is greater than or equal to a predetermined value.

4. The injection molding machine (1) as claimed in claim 1, wherein the control signal is outputted so that a ratio of the direct current voltage to a maximum allowable voltage of the capacitor (14) becomes a predetermined ratio at a time of completion of electric power regeneration from the inverter to the capacitor (14).

## Patentansprüche

1. Spritzgussmaschine (1), die einen rückspeisefähigen Leistungsversorgungswandler beinhaltet, der zwischen einer Wechselstromleistungsversorgung (20) und einem Umrichter (30) verbunden ist, wobei der rückspeisefähige Leistungsversorgungswandler Folgendes umfasst:
einen Kondensator (14);
ein elektrisches Leistungsumwandlungsteil (11), das einen Eingang mit einer Wechselstromleistungsversorgung (20) verbunden, und einen Ausgang mit dem Kondensator (14) verbunden aufweist, und dazu ausgebildet ist, bidirektional zwischen der Wechselstromleistungsquelle (20) und der elektrischen Gleichstromleistung in dem Kondensator (14) umzuwandeln,
einen Gleichspannungsdetektor (15), der dazu ausgebildet ist, eine Gleichspannung des Kondensators (14) zu detektieren;
einen WS-Detektor (13), der dazu ausgebildet ist, die Magnitude eines Wechselstroms zu detektieren, der zwischen dem elektrischen Leistungswandlungsteil (11) und der Wechselstromleistungsversorgung (20) fließt,
ein Wechselstromsteuerungsteil (16), das dazu ausgebildet ist, ein Steuerungssignal, das basierend auf einer von dem Gleichspannungsdetektor (15) detektierten Gleichspannung und einer Zeitvarianz der Gleichspannung erzeugt wird, an das elektrische Leistungswandlungsteil (11) auszugeben, und dazu ausgebildet ist, einen Wechselstrom zu steuern, der zwischen der Wechselstromleistungsversorgung (20) und dem elektrischen Leistungswandlungsteil (11) fließt,
wobei in einem Fall, in dem die Gleichspannung größer als oder gleich einer Rückspeisungsstartspannung ist, der rückspeisefähige Leistungsversorgungswandler für Folgendes eingerichtet ist:
Berechnen einer Differenz (ΔV) zwischen einer Gleichspannung, die bei einem vorigen Steuerungszyklus detektiert wurde, und einer Gleichspannung, die bei einem aktuellen Steuerungszyklus detektiert wird,
Ausgeben eines Zielwechselstrombefehlswerts (ATGT) entsprechend der Differenz (ΔV), wobei, falls der Strombefehlswert über einem maximalzulässigen Wert (Amax) ist, der Zielwechselstrombefehlswert (ATGT) auf den maximalzulässigen Wert (Amax) eingestellt wird, falls der Strombefehlswert unter einem minimalzulässigen Wert (Amin) ist, der Zielwechselstrombefehlswert (ATGT) auf den minimalzulässigen Wert (Amin) eingestellt wird, und wobei der Zielwechselstrombefehlswert (ATGT) auf den minimalzulässigen Wert (Amin) eingestellt wird, falls die Differenz (ΔV) negativ ist,
Ausgeben eines Steuerungssignals an das elektrische Leistungswandlungsteil (11) entsprechend einer Differenz (ΔA) zwischen dem Zielwechselstrombefehlswert und einem aktuellen Wechselstromwert, der von dem WS-Detektor (13) gemessen wird, und
in einem Fall, in dem ein Wechselstrom, der von dem rückspeisefähigen Leistungsversorgungswandler zu der Wechselstromleistungsversorgung (20) fließt, einen maximalzulässigen Wert erreicht, der rückspeisefähige Leistungsversorgungswandler eingerichtet ist, den Zielwechselstrombefehlswert auf einen maximalzulässigen Wert (Amax) einzustellen und bei dem Kondensator (14) eine elektrische Leistung zu speichern, die ein Teil einer elektrischen Leistung ist, die zu dem Kondensator (14) rückgespeist wird, indem der Wechselstrom begrenzt wird, der von dem rückspeisefähigen Leistungsversorgungswandler zu der Wechselstromleistungsversorgung (20) fließt, der nicht zu der Wechselstromleistungsversorgung (20) zurückgeführt wird und einer Differenz zwischen der zu dem Kondensator (14) rückgespeisten elektrischen Leistung und einer zu der Wechselstromleistungsversorgung (20) rückgespeisten elektrischen Leistung entspricht.

2. Spritzgussmaschine (1) nach Anspruch 1, wobei das Wechselstromsteuerungsteil (16) ein Steuerungssignal an das elektrische Leistungswandlungsteil (11) ausgibt, um einen Anstieg der Gleichspannung auszugleichen, falls die Gleichspannung größer als oder gleich einer Rückspeisungsstartspannung ist.

3. Spritzgussmaschine (1) nach Anspruch 1, wobei das Steuerungssignal derart ausgegeben wird, dass ein Wechselstrom daran gehindert wird, unabhängig von einer Änderung der Gleichspannung von der Wechselstromleistungsversorgung (20) zu dem elektrischen Leistungswandlungsteil (11) zu fließen, falls die Gleichspannung größer als oder gleich einem vorgegebenen Wert ist.

4. Spritzgussmaschine (1) nach Anspruch 1, wobei das Steuerungssignal derart ausgegeben wird, dass ein Verhältnis der Gleichspannung zu einer maximalzulässigen Spannung des Kondensators (14) zu einer Abschlusszeit elektrischer Leistungsrückspeisung von dem Umrichter zu dem Kondensator (14) ein vorgegebenes Verhältnis wird.

## Revendications

1. Machine de moulage par injection (1) incluant un convertisseur régénératif d'alimentation électrique relié entre une alimentation électrique en courant alternatif (20) et un onduleur (30), le convertisseur régénératif d'alimentation électrique comprenant :
un condensateur (14) ;
une partie de conversion d'énergie électrique (11) présentant une entrée reliée à une source d'alimentation en courant alternatif (20) et une sortie reliée au condensateur (14), et configurée pour réaliser de manière bidirectionnelle une conversion entre la source d'alimentation électrique en courant alternatif (20) et l'énergie électrique en courant continu dans le condensateur (14),
un détecteur de tension continue (15) configuré pour détecter une tension continue du condensateur (14) ;
un détecteur de CA (13) configuré pour détecter l'amplitude d'un courant alternatif circulant entre la partie de conversion d'énergie électrique (11) et la source d'alimentation en courant alternatif (20),
une partie de régulation de courant alternatif (16) configurée pour émettre un signal de régulation, qui est produit sur la base d'une tension continue détectée par le détecteur de tension continue (15) et d'un écart temporel de la tension continue, à la partie de conversion d'énergie électrique (11), et configurée pour réguler un courant alternatif circulant entre l'alimentation électrique en courant alternatif (20) et la partie de conversion d'énergie électrique (11),
dans laquelle, dans un cas où la tension continue est supérieure ou égale à une tension de début de régénération, le convertisseur régénératif d'alimentation électrique est agencé pour :
calculer une différence (ΔV) entre une tension continue détectée lors d'un précédent cycle de régulation et une tension continue détectée lors d'un actuel cycle de régulation,
émettre une valeur de commande de courant alternatif cible (ATGT) correspondant à la différence (ΔV), dans laquelle, si la valeur de commande de courant est supérieure à une valeur admissible maximale (Amax), la valeur de commande de courant alternatif cible (ATGT) est définie à la valeur admissible maximale (Amax), si la valeur de commande de courant est inférieure à une valeur admissible minimale (Amin), la valeur de commande de courant alternatif cible (ATGT) est définie à la valeur admissible minimale (Amin) et dans laquelle la valeur de commande de courant alternatif cible (ATGT) est définie à la valeur admissible minimale (Amin) si la différence (ΔV) est négative,
émettre un signal de régulation vers une partie de conversion d'énergie électrique (11) correspondant à une différence (ΔA) entre la valeur de commande de courant alternatif cible et une valeur de courant alternatif actuelle mesurée par le détecteur de CA (13),
et
dans un cas où un courant alternatif circulant du convertisseur régénératif d'alimentation électrique à l'alimentation électrique en courant alternatif (20) atteint une valeur admissible maximale, le convertisseur régénératif d'alimentation électrique est agencé pour définir la valeur de commande de courant alternatif cible à une valeur admissible maximale (Amax) et pour stocker dans le condensateur (14) une énergie électrique qui est une partie d'une énergie électrique régénérée dans le condensateur (14) de manière à limiter le courant alternatif circulant du convertisseur régénératif d'alimentation électrique à l'alimentation électrique en courant alternatif (20), qui n'est pas renvoyée à l'alimentation électrique en courant alternatif (20) et qui correspond à une différence entre l'énergie électrique régénérée au condensateur (14) et une énergie électrique régénérée à l'alimentation électrique en courant alternatif (20).

2. Machine de moulage par injection (1) selon la revendication 1, dans laquelle la partie de régulation de courant alternatif (16) émet vers la partie de conversion d'énergie électrique (11) un signal de régulation pour annuler un incrément de la tension continue si la tension continue est supérieure ou égale à une tension de début de régénération.

3. Machine de moulage par injection (1) selon la revendication 1, dans laquelle le signal de régulation est émis de telle sorte qu'un courant alternatif ne puisse pas circuler de l'alimentation électrique en courant alternatif (20) à la partie de conversion d'énergie électrique (11) indépendamment du changement de la tension continue si la tension continue est supérieure ou égale à une valeur prédéterminée.

4. Machine de moulage par injection (1) selon la revendication 1, dans laquelle le signal de régulation est émis de telle sorte qu'un rapport de la tension continue sur une tension admissible maximale du condensateur (14) devienne un rapport prédéterminé au moment de l'achèvement d'une régénération d'énergie électrique de l'onduleur au condensateur (14).
